# EUROPEAN PATENT APPLICATION

(11) **EP 3 626 945 A1**
(43) Date of publication of application: **25.03.2020**
(21) Application number: 19197637.2
(22) Date of filing: 16.09.2019
(51) Int. Cl.: F02C 7/36

(54) **VARIABLE GEAR RATIO GAS TURBINE ENGINE SYSTEM**

(30) Priority: 20.09.2018 US 201816137102
(71) Applicant: Honeywell International Inc., Morris Plains, NJ New Jersey 07950 (US)
(72) Inventor: BLUMER, Eric, Morris Plains, NJ New Jersey 07950 (US); JAN, David K, Morris Plains, NJ New Jersey 07950 (US)
(74) Representative: LKGlobal UK Ltd.

(57) **Abstract**

A variable gear ratio gas turbine engine system includes a planetary gear set, a gas turbine engine, an electric machine, and a controller. The gas turbine engine includes at least a low-pressure compressor, a high-pressure compressor, a combustor, a high-pressure turbine, and a low-pressure turbine. The low-pressure turbine is coupled to the low-pressure compressor via the planetary gear set. The electric machine is coupled to the planetary gear set and its rotational speed is used, at least in part, to vary the gear ratio of the planetary gear set. The controller is in operable communication with the gas turbine engine and the electric machine and is configured to control: the low-pressure turbine to rotate at a substantially constant speed and the rotational speed of the electric machine to thereby vary the gear ratio of the planetary gear set, whereby the speed at which the low-pressure compressor rotates is also varied.

## Description

### TECHNICAL FIELD

The present invention generally relates to gas turbine engines, and more particularly relates to a variable gear ratio gas turbine engine system.

### BACKGROUND

A typical dual-spool gas turbine engine includes at least a low-pressure compressor, a high-pressure compressor, a combustor, a high-pressure turbine, and a low-pressure turbine. The high-pressure turbine is coupled to the high-pressure compressor via a high-pressure spool, and the low-pressure turbine is coupled to the low-pressure compressor via a separate low-pressure spool. In some configurations, the low-pressure compressor is directly connected to the low-pressure turbine, and in other configurations it is coupled to the low-pressure turbine via a fixed ratio gearbox.

During engine operation, the high-pressure and low-pressure spools often rotate at different speeds to match compressor and turbine flows, pressures, and temperatures at different operating conditions, even as an engine degrades. This allows better efficiencies. Providing a gearbox between the low-pressure turbine and the low-pressure compressor allows increased flexibility in designing compressors and turbines for optimum performance and matching. This is because the gearbox allows the low-pressure compressor and low-pressure turbine to rotate at different relative speeds, based on the gear ratio. However, there is no ability to continuously change the gearing ratio, which may be desirable to vary engine output power without change low-pressure turbine speed. To date, attempts at providing a continuously variable gear ratio have resulted in relatively heavy and inefficient designs.

Hence, there is a need for a continuously variable transmission that is relatively light and inexpensive, and that allows optimized matching between the rotational speed of the compressors and turbines with that is light and efficient. The present invention addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a variable gear ratio gas turbine engine system includes a planetary gear set, a gas turbine engine, an electric machine, and a controller. The planetary gear set has a gear ratio that is variable. The gas turbine engine includes at least a low-pressure compressor, a high-pressure compressor, a combustor, a high-pressure turbine, and a low-pressure turbine. The high-pressure turbine is coupled to the high-pressure compressor, and the low-pressure turbine is coupled to the low-pressure compressor via the planetary gear set. The electric machine is coupled to the planetary gear set and is configured to rotate at a rotational speed. The rotational speed of the electric machine being used, at least in part, to vary the gear ratio of the planetary gear set. The controller is in operable communication with the gas turbine engine and the electric machine. The controller is configured to: control the low-pressure turbine to rotate at a substantially constant speed, and control the rotational speed of the electric machine to thereby vary the gear ratio of the planetary gear set, whereby the speed at which the low-pressure compressor rotates is also varied.

In another embodiment, a variable gear ratio gas turbine engine system, includes a planetary gear set, a gas turbine engine, a motor-generator, and a controller. The planetary gear set has a gear ratio that is variable. The gas turbine engine includes at least a low-pressure compressor, a high-pressure compressor, a combustor, a high-pressure turbine, and a low-pressure turbine. The high-pressure turbine is coupled to the high-pressure compressor, and the low-pressure turbine is coupled to the low-pressure compressor via the planetary gear set. The motor-generator is configured to be to be operated in a plurality of different operational modes. The different operational modes include a motor mode and a generator mode. The motor-generator is coupled to the planetary gear set and is further configured to rotate at a rotational speed. The rotational speed of the motor-generator being used, at least in part, to vary the gear ratio of the planetary gear set. The controlleris in operable communication with the gas turbine engine and the motor-generator. The controller is configured to control the low-pressure turbine to rotate at a substantially constant speed, control the operational mode of the motor-generator, and control the rotational speed of the motor-generator to thereby vary the gear ratio of the planetary gear set, whereby the speed at which the low-pressure compressor rotates is also varied.

In yet another embodiment, a propulsion turbine engine system includes a gas turbine engine, a motor-generator, a controller, and a planetary gear set. The gas turbine engine includes at least a low-pressure compressor, a high-pressure compressor, a combustor, a high-pressure turbine, and a low-pressure turbine. The high-pressure turbine is coupled to the high-pressure compressor, and the low-pressure turbine is coupled to the low-pressure compressor via the planetary gear set. The motor-generator is configured to rotate at a rotational speed and is further configured to be operated in a plurality of different operational modes. The different operational modes include a motor mode and a generator mode. The controller is in operable communication with the gas turbine engine and the motor-generator. The controller is configured to (i) control the low-pressure turbine to rotate at a substantially constant speed and (ii) control the rotational speed and operational mode of the motor-generator. The planetary gear set is coupled to the low-pressure compressor, the motor-generator, and the low-pressure turbine, and includes a ring gear, a planet gear carrier, and a sun gear. The ring gear is coupled to the low-pressure compressor. The planet gear carrier is coupled to the motor-generator and to a plurality of planet gears, and each planet gear is independently meshed with the ring gear. The sun gear is coupled to the low-pressure turbine and is meshed with each of the planet gears.

Furthermore, other desirable features and characteristics of the variable gear ratio gas turbine engine system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a simplified schematic representation of one embodiment of a variable gear ratio gas turbine engine system; and
FIG. 2 depicts one embodiment of a planetary gear set that may be used in the gas turbine engine system of FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

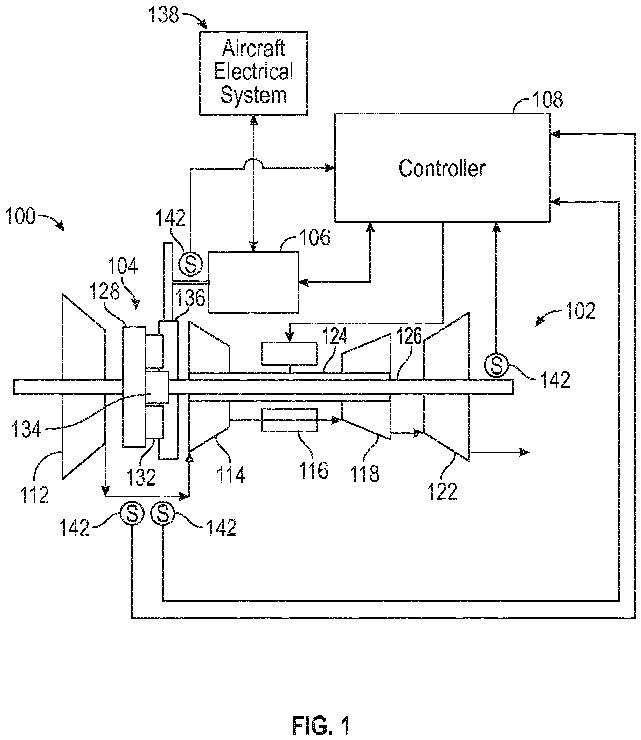

Referring further to FIG. 1, a simplified schematic representation of one embodiment of a variable gear ratio gas turbine engine system 100 is depicted. The depicted system 100 includes a gas turbine engine 102, a planetary gear set 104, an electric machine 106, and a controller 108. Before proceeding further, it is noted that the gas turbine engine 102 may be a propulsion engine, an auxiliary power unit (APU), a land-based gas turbine engine, or any one of numerous end-uses for a gas turbine engine.

The gas turbine engine 102 includes at least a low-pressure compressor 112, a high-pressure compressor 114, a combustor 116, a high-pressure turbine 118, and a low-pressure turbine 122. The low-pressure compressor 112 draws air into the gas turbine engine 102. The low-pressure compressor compresses the intake air and directs the directs the compressed air into the high-pressure compressor 114. The high-pressure compressor 114 further compresses the air and directs the further compressed air into the combustor 116.

In the combustor 116, the compressed air is mixed with fuel that is controllably supplied thereto from a non-illustrated fuel source. The fuel/air mixture is combusted in the combustor 116, to generate a high-energy combusted air mixture. The high-energy combusted air mixture is then directed into the high-pressure turbine 118. The high-energy combusted air mixture from the combustor 116 expands through the high-pressure turbine 118 and then through the low-pressure turbine 122, causing each to rotate. The combusted air mixture is then exhausted from the gas turbine engine 102.

As the high-pressure and low-pressure turbines 118 and 122 rotate, each drives equipment in the engine 102 via concentrically disposed shafts or spools. Specifically, the high-pressure turbine 118 is coupled to, and drives, the high-pressure compressor 114 via a high-pressure spool 124. The low-pressure turbine 122 is coupled to, and drives, the low-pressure compressor 118 via a low-pressure spool 126 and, as will now be described below, the planetary gear set 104.

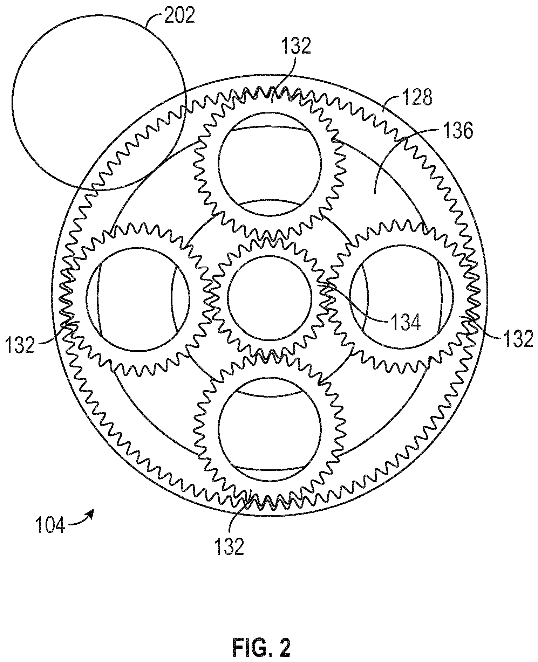

The planetary gear set 104 is coupled to the low-pressure compressor 112, the electric machine 106, and the low-pressure turbine 122. The planetary gear set 104 is configured to implement a gear ratio that is variable and, as is generally known, includes a ring gear 128, a plurality of planet gears 132, a sun gear 134, and planet gear carrier 136. For completeness, one embodiment of the planetary gear set 104 is depicted in FIG. 2, and can be referenced as needed or desired. As is also known, each of the planet gears 132 independently meshes with the ring gear 128 and with the sun gear 134, and each planet gear 132 is rotationally coupled to the planet gear carrier 136. In the example embodiment depicted in FIG. 2, the planetary gear set 104 includes four planet gears 132. It will be appreciated that this is merely exemplary, and that the planetary gear set 104 could be implemented with more or less than this number of planet gears 132. As FIG. 2 also depicts, an electric machine interface gear 202 is coupled to the planet gear carrier 136. The electric machine interface gear 202 is coupled to the electric machine 106, either directly or via a separate gear system to optimize electric machine operation.

Returning now to FIG. 1, it is seen the electric machine 106 is coupled to the planetary gear set 104, and more particularly to the planet gear carrier 136, and is configured to rotate at a rotational speed. Because the electric machine 106 is coupled to the planet gear carrier 136, its rotational speed is used, at least in part, to vary the gear ratio of the planetary gear set 104. It will be appreciated that the electric machine 106 may be configured as a motor, a generator, or as a motor-generator. When the electric machine 106 is configured as a motor-generator, it may be controlled to operate in a plurality of different operational modes. Specifically, it may be controlled to operate in a motor mode, in which it converts electrical power from the aircraft electrical system 138 into rotational torque, and in a generator mode, in which it converts rotational torque from the low-pressure turbine 122 into electrical power and supplies it to the aircraft electrical system 138.

The controller 108 is in operable communication with the gas turbine engine 102 and the electric machine 106. The controller 108 is configured to control both the gas turbine engine 102 and electric machine 104. Preferably, during operation of the gas turbine engine, the controller 108 is configured, among other functions, to control the low-pressure turbine 122 to rotate at a substantially constant speed. The controller 108 is additionally configured to control the rotational speed of the electric machine 106 to thereby vary the gear ratio of the planetary gear set 104. By varying the gear ratio of the planetary gear set 104, the speed at which the low-pressure compressor rotates 112 is also varied.

In the depicted embodiment, the ring gear 128 is coupled to the low-pressure compressor 112, the planet gear carrier 136 is coupled to the electric machine 106, and the sun gear 134 is coupled to the low-pressure turbine 122. Thus, by varying the speed of the electric machine 106, the gear ratio between the low-pressure turbine 122 and the low-pressure compressor 112 is also varied. The gear ratio can be selected and the operational mode of the electric machine 106 can controlled such that the electric machine 106 supplies electric power (i.e., operates in the generator mode) to the aircraft electrical system 138, or the electrical machine 106 consumes electric power (i.e., operates in the motor mode) from the aircraft electrical system 138.

To provide one example of when and how the above-described configuration may be advantageous, consider aircraft operations at different altitudes. As is generally known, atmospheric pressure is greater at sea level than it is at higher altitudes. Thus, for a given discharge pressure, the required pressure ratio of the low-pressure compressor 112 is lower at atmospheric pressure than it is at higher altitudes, and the low-pressure compressor 112 needs to work harder (i.e., rotate faster) to achieve the same discharge pressure. This variation in speed is readily achieved by varying the gear ratio of the planetary gear set 104, rather than undesirably varying the speed of the low-pressure turbine 122.

Including the planetary gear set 104 between the low-pressure turbine 122 and the low-pressure compressor 112 allows the low-pressure compressor 112 to deliver a wide range of flows and pressures even though the low-pressure turbine 122 is controlled to rotate at a constant speed. Indeed, the controller 108 may, in some embodiments, be responsive, at least in part, to sensor signals received from various sensor to control the rotational speed and/or operational mode of the electric machine 106 to achieve a desired flow and pressure from the low-pressure compressor 112. Thus, as depicted in FIG. 1, in some embodiments the system 100 may additionally include a plurality of sensors 142. Each sensor 142, when included, is in operable communication with the controller 108, and each is configured to sense a different physical parameter and supply a sensor signal representative of the sensed physical parameter. The particular type of sensor and physical parameter may vary, but may include, for example, one or more pressure sensors, one or more flow path temperature sensors, and one or more rotational speed sensors, just to name a few.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A variable gear ratio gas turbine engine system, comprising:
a planetary gear set having a gear ratio that is variable;
a gas turbine engine including at least a low-pressure compressor, a high-pressure compressor, a combustor, a high-pressure turbine, and a low-pressure turbine, the high-pressure turbine coupled to the high-pressure compressor, the low-pressure turbine coupled to the low-pressure compressor via the planetary gear set;
an electric machine coupled to the planetary gear set and configured to rotate at a rotational speed, the rotational speed of the electric machine being used, at least in part, to vary the gear ratio of the planetary gear set; and
a controller in operable communication with the gas turbine engine and the electric machine, the controller configured to:
control the low-pressure turbine to rotate at a substantially constant speed; and
control the rotational speed of the electric machine to thereby vary the gear ratio of the planetary gear set, whereby the speed at which the low-pressure compressor rotates is also varied.

2. The system of claim 1, wherein the planetary gear set comprises:
a ring gear coupled to the low-pressure compressor;
a planet gear carrier coupled to the electric machine and to a plurality of planet gears, each planet gear independently meshed with the ring gear;
a sun gear coupled to the low-pressure turbine and meshed with each of the planet gears.

3. The system of claim 1, wherein the electric machine comprises a motor-generator configured to be selectively controlled as either a motor or a generator.

4. The system of claim 2, wherein the controller is further configured to control the motor-generator to operate as either a motor or a generator.

5. The system of claim 1, further comprising:
a plurality of sensors in operable communication with the controller, each one of the sensors configured to sense a different physical parameter and supply a sensor signal representative of the sensed physical parameter.

6. The system of claim 1, wherein the different physical parameters comprise pressure, temperature, and rotational speed.

7. The system of claim 6, wherein the controller is responsive, at least in part, to the sensor signals to control the rotational speed of the electric machine.

8. The system of claim 1, wherein the gas turbine engine is a propulsion engine.

9. The system of claim 1, wherein the gas turbine engine is an auxiliary power unit.
